**Europäisches Patentamt**

**European Patent Office**

**Office européen des brevets**

(19)

(11) Veröffentlichungsnummer: **0 126 211**
**B1**

(12) **EUROPÄISCHE PATENTSCHRIFT**

(45) Veröffentlichungstag der Patentschrift: **01.08.90**

(21) Anmeldenummer: **84101253.7**

(22) Anmeldetag: **08.02.84**

(51) Int. Cl.⁵: **G 01 D 5/244**

(54) Inkrementale Längen- oder Winkelmesseinrichtung.

(30) Priorität: **26.03.83 DE 3311204**

(43) Veröffentlichungstag der Anmeldung:
**28.11.84 Patentblatt 84/48**

(45) Bekanntmachung des Hinweises auf die
Patenterteilung:
**01.08.90 Patentblatt 90/31**

(84) Benannte Vertragsstaaten:
**AT CH DE FR GB IT LI NL SE**

(56) Entgegenhaltungen:
**DE-A-1 964 381**
**GB-A-1 284 641**
**GB-A-2 088 048**
**US-A-3 139 613**

(73) Patentinhaber: **Dr. Johannes Heidenhain GmbH
Dr.-Johannes-Heidenhain-Strasse 5 Postfach
1260
D-8225 Traunreut (DE)**

(72) Erfinder: **Burkhardt, Horst, Dr.
Fraueneichweg 12
D-8221 Truchtlaching (DE)**

Courier Press, Leamington Spa, England.

**Beschreibung**

Die Erfindung bezieht sich auf inkrementale Längen- oder Winkelmeßeinrichtungen nach dem Oberbegriff des Anspruchs 1.

Es sind Längen- und Winkelmeßeinrichtungen sowie Verfahren zur Ermittlung von Bezugspositionen bekannt, bei denen relativ zueinander bewegliche Maschinen- oder Meßsystem-Bausteine aus einer Ausgangsposition bis zu einer Referenzmarke verfahren werden, um den bis dort zurückgelegten Wert zu ermitteln und zu speichern, oder die Referenzmarke zur Bezugsposition mit dem Wert "Null" zu erklären. Ein solches Verfahren ist mit einem inkrementalen Längen- oder Winkelmeßsystem möglich, wie es in der DE-PS 19 64 381 beschrieben wird. Dieses Verfahren erfordert aber eine ungehinderte Relativbeweglichkeit der zu messenden Objekte, da Bauteile der Meßeinrichtung fest mit den zu messenden Objekten verbunden sind und gemeinsam mit diesen bis zu einer Referenzmarke verstellt werden müssen.

Aus der DE-OS 16 73 887 ist ferner ein Meßsystem bei einer Maschine bekannt, das bei auf dem Maschinenbett festgeklemmtem Maschinenschlitten die Ermittlung einer Bezugsposition ermöglicht. Als erstes muß dort der Schlitten in diejenige Position gefahren werden, die später als Bezugsposition zu Null erklärt werden soll. Danach wird der Schlitten auf dem Maschinenbett festgeklemmt. Anschließend wird die Abtastplatte relativ zum Maßstab verfahren, bis eine Referenzmarke auftritt. Bei Erreichen der Referenzmarke wird der elektronische Zähler der Meßeinrichtung auf Null gesetzt. Sodann kann die Klemmung für die Maschinenteile wieder gelöst und der Schlitten in die gewünschte Position eingefahren werden. Die Lage der Referenzmarke stellt also die Bezugsposition für die weiteren Arbeitsgänge dar.

Die bekannten Verfahren zur Ermittlung einer als Ausgangslage definierten Bezugsposition - die vor den eigentlichen Arbeitsgängen erfolgt - sind mit den beschriebenen inkrementalen Meßeinrichtungen jedoch dann nicht mehr möglich, wenn bereits Arbeitsgänge erfolgt sind, und beispielsweise laufende Arbeitsgänge unterbrochen werden. Die Unterbrechung eines laufenden Arbeitsganges, beispielsweise bei einem Handhabungsautomaten - im allgemeinen als Industrieroboter bezeichnet - ist durch Stromausfall möglich. Der Roboter bleibt dann in seiner momentanen Position stehen; der auf seine ursprüngliche Bezugsposition bezogene, nach dem Stand der Technik ermittelte Meßwert geht aber durch den Stromausfall verloren, da auch die Messung unterbrochen wurde.

Zur Fortführung des unterbrochenen Arbeitsganges müßte jedoch die Bezugsposition bekannt sein. Eine Rückbewegung des Roboters aus seiner Momentanposition in die ursprüngliche Ausgangslage scheidet aber in der Regel aus, weil beispielsweise gerade ein Werkzeug im Eingriff ist.

Aus der GB-A-1284641 ist eine Meßeinrichtung bekannt, bei der für Referenzzwecke außer einem Steuerungsgitter noch ein Bezugsgitter vorgesehen ist.

Die US-A-3139613 beschreibt einen Wellenkodierapparat, bei dem mehrere Abtasteinrichtungen in Form von Bürsten und Kontakten vorgesehen sind.

Der Erfindung liegt die Aufgabe zugrunde, eine Meßeinrichtung zu schaffen, die die Nachteile der bekannten Vorrichtungen beseitigt, und es ermöglicht, nach Verlust der Lage-Information in unbekannten Momentanpositionen ohne Bewegung der zu messenden Objekte eine Bezugsposition zu reproduzieren.

Diese Aufgabe wird durch die im Anspruch 1 angegebenen Merkmale gelöst.

Weitere vorteilhafte Ausgestaltungen der Erfindung sind den abhängigen Ansprüchen zu entnehmen.

Mit Hilfe von Zeichnungen soll anhand eines Ausführungsbeispieles die Erfindung näher erläutert werden.

Es zeigt

Figur 1 ein Winkelmeßgerät in Schnittdarstellung,

Figur 2 Ansicht eines Ausschnittes aus einem Markierungsträgerkörper,

Figur 3 Ansicht eines Ausschnittes aus einer Maßverkörperung und

Figur 4 Ansicht einer Abtastplatte.

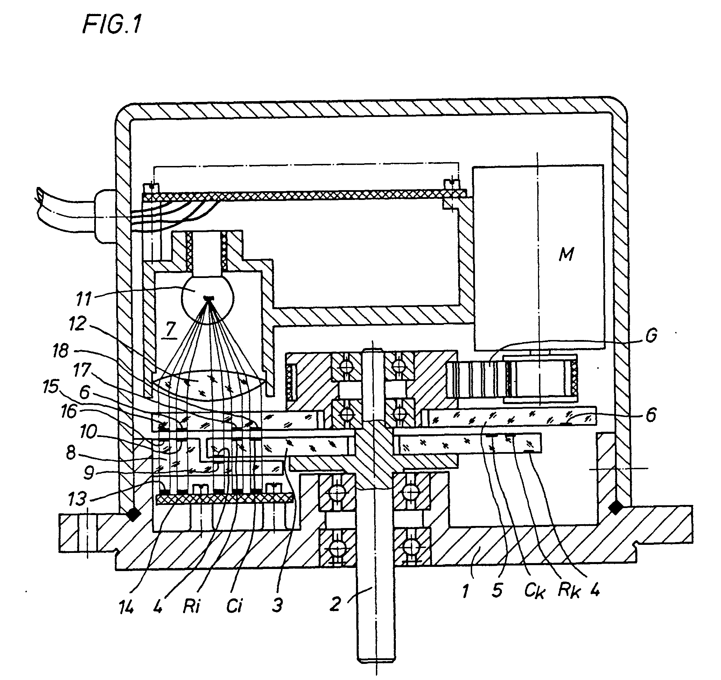

Die in Figur 1 dargestellte Winkelmeßeinrichtung weist ein Gehäuse 1 auf, das im Gehäuse eines nicht dargestellten Industrieroboters befestigt ist. Eine im Gehäuse 1 drehbar gelagerte Welle 2 ragt in das Gehäuse 1 hinein und trägt dort eine Scheibe 3 mit einer Inkrementalteilung 4 in Form eines Gitters. Die Inkrementalteilung 4 wird lichtelektrisch abgetastet.

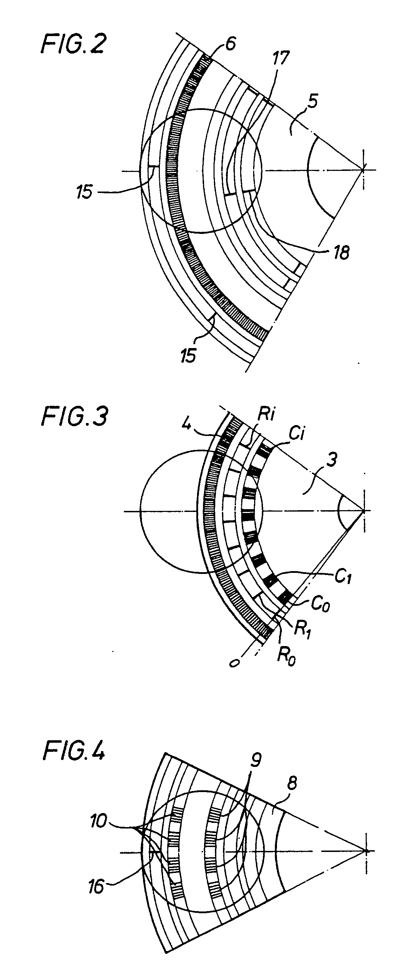

Eine zweite Scheibe 5 ist drehbar auf der Welle 2 gelagert. Die Scheibe 5 trägt konzentrisch ebenfalls eine Inkrementalteilung 6. Die weiteren Markierungen auf den Scheiben 3 und 5 werden bei der Beschreibung der Figuren 2 bis erläutert. Eine Abtasteinrichtung 7 weist eine Abtastplatte 8 auf, die Markierungen in Form von Abtastfeldern 9 und 10 trägt. Des weiteren besteht die Abtasteinrichtung aus einer Beleuchtung 11, einem Kondensor 12 und Fotosensoren 13, die auf einer Platte 14 angeordnet sind. Bei Rotation der Welle 2 dreht sich die Scheibe 3 mit und die Inkrementalteilung 4 bewegt sich über die Abtastfelder 9, die auch eine der Inkrementalteilung 4 entsprechende Gitterteilung haben. Der von der Beleuchtung 11 ausgehende Lichtstrom wird durch die relativ zueinander bewegten Gitter moduliert und fällt auf die Fotosensoren 13, die ihn in Strom umwandeln und einer bekannten, nicht dargestellten Auswerteeinrichtung zuführen. Aus den von den Fotosensoren 13 gelieferten Signalen werden Impulse geformt. Die gezählten Impulse stehen am Zählerausgang als Meßwert in digitaler Form zur Verfügung.

In den Figuren 2 bis 4 werden ein Ausschnitt eines Trägerkörpers 5, ein Ausschnitt einer Maßverkörperung - die durch eine Teilscheibe 3 gebildet wird - und eine Abtastplatte 8 gezeigt, die verschiedene Markierungen tragen.

Der in Figur 2 dargestellte Trägerkörper 5 weist mehrere Markierungsspuren auf, von denen eine mit einer Inkrementalteilung 6 versehen ist. In der äußeren Spur sind Markierungen 15 angeordnet, die zusammen mit einer Markierung 16 auf der Abtastplatte 8 (Figur 4) zu Steuerzwecken dienen, wenn die Meßeinrichtung in eine noch zu erläuternde Betriebsart - nämlich das Gewinnen oder Reproduzieren einer Bezugsposition - überführt wird. Weitere Markierungen 17 dienen zum Abtasten von Referenzmarken Ro...Rn, die auf der Teilscheibe 3 in absoluter Zuordnung zum Teilungsnullpunkt der Inkrementalteilung 4 festgelegt sind. Die absolute Position der einzelnen Referenzmarken Ro...Rn wird durch Codemarken Co...Cn gekennzeichnet, die die Absolutposition der zugehörigen Referenzmarke Ro...Rn als codierte Information, beispielsweise als sogenannten Barcode enthält. Die Markierungen Co...Cn werden mit Hilfe von Markierungen 18 abgelesen, die sich auf der inneren Spur des Trägerkörpers 5 befinden.

Die Teilscheibe 3 ist auf der Welle 2 befestigt und mit dieser drehbar im Gehäuse 1 gelagert. Die Abtastplatte 8 ist als Bestandteil der Abtasteinrichtung 7 ortsfest im Gehäuse 1 angeordnet. Auf der Welle 2 ist ferner der Trägerkörper 5 angeordnet, konzentrisch zur Teilscheibe 3, jedoch relativ zu dieser drehbar. Mittels eines Motors M, der über ein Zahnriemengetriebe G den Trägerkörper 5 in ständige Rotation versetzt, ist der Trägerkörper 5 unabhängig von der Drehung der Welle 2 und damit von der Teilscheibe 3 drehbar.

Wird der Trägerkörper 5 gedreht, wird die Inkrementalteilung 6 des Trägerkörpers 5 über die Abtastfelder 10 bewegt und der von der Beleuchtung 11 ausgesandte Lichtstrom fällt moduliert auf einen der Fotosensoren 13. Im normalen Meßbetrieb wird der Strom dieses betreffenden Fotosensors jedoch nicht ausgewertet. In gleicher Weise wird durch einen der Fotosensoren 13 jedesmal ein Signal erzeugt, wenn eine der Markierungen 15 über das Abtastfeld 16 oder eine der Markierungen 17 bzw. 18 über eine der Referenzmarken Ro...Rn bzw. über die Codemarken Co...Cn bewegt wird. Auch diese Signale werden im normalen Meßbetrieb nicht ausgewertet. Im normalen Meßbetrieb werden nur die Signale ausgewertet, die bei Drehung der Welle 2 und der Teilscheibe 3 gegenüber dem Gehäuse 1 durch die Lichtmodulation an der Inkrementalteilung 4 und der zugehörigen Abtastfelder 9 von den zugehörigen Fotosensoren erzeugt werden.

Bei inkrementalen Meßeinrichtung ist es jedoch von großer Bedeutung, zu Beginn einer Messung eine Bezugsposition zu bestimmen, die als Ausgangsbasis für die Messungen dient, und die auch nach Störfällen wieder reproduziert werden kann.

Es wird davon ausgegangen, daß sich vor Beginn einer Messung oder auch im Störfall - bei dem ja bekanntlich bei inkrementalen Meßeinrichtungen der Meßwert verloren geht - die relativ zu einander beweglichen zu messenden Objekte im Stillstand befinden.

Die Teilscheibe 3 befindet sich also in einer Position, in der die Lage ihres Teilungsnullpunktes relativ zum Gehäuse 1, also auch zur Abtastplatte 8 nicht bekannt ist.

Um die Bezugsposition festzulegen, muß nun die momentane Lage bestimmt werden. Dazu wird in bekannter und daher nicht näher bezeichneten Weise ein Zähler in der Auswerteeinrichtung auf Null oder auf einen vorgegebenen anderen Zahlenwert eingestellt, und gleichzeitig die Eichbetriebsart eingeschaltet. Der vom Motor M angetriebene Trägerkörper 5 rotiert dabei wie bereits beschrieben, da er ja unabhängig von der Relativbewegung von Teilscheibe 3 und Gehäuse 1 ist. Eine der Markierungen 15 auf dem rotierenden Trägerkörper 5 überstreicht dann nach kurzer Zeit das Abtastfeld 16 auf der ortsfesten Abtastplatte 8, wodurch in einem der Fotosensoren 13 ein Signal erzeugt wird, das in der Eichbetriebsart den nicht dargestellten Zähler ansteuert und ihn startet. Von diesem Moment an werden die Signale, die von der Teilung 6 und den Abtastfeldern 10 erzeugt werden, als Zählimpulse ausgewertet und gezählt. Es werden also die Teilungsinkremente gezählt, die bei der Rotation des Trägerkörpers 5 gegenüber der Abtastplatte 8 überstrichen werden. Nach dem Zählerstart überfährt die Markierung 17 irgendwann die nächste Referenzmarke Ri, und die Markierung 18 liest dabei die zugehörige Codemarke Ci ab. Im Moment des Überfahrens der Referenzmarke Ri wird durch ein Signal des zugehörigen Fotosensors der Zähler gestoppt. Der Zähler enthält jetzt als Meßwert den Winkelweg, den der Trägerkörper 5 vom Zählerstart bis zum Zählerstopp zurückgelegt hat. Die Markierung 18 hat dabei den absoluten Positionswert aus der Codemarke Ci abgelesen, die zu der Referenzmarke Ri gehört, die den Zähler gestoppt hat. Dieser absolute Positionswert wird nun in die Auswerteeinrichtung eingespeist und dem Meßwert des Zählers überlagert. In der Auswerteeinrichtung steht nun der absolute Positionswert an, den die Teilscheibe 3 zum Gehäuse 1 momentan einnimmt. Damit ist der Eichvorgang beendet. Der Zähler kann nun wieder mit den Zählimpulsen gespeist werden, die bei der Drehung der Teilscheibe 3 durch die Teilung 4 und die Abtastfelder 9 erzeugt werden.

Kommt es zu Störungen, so kann sinngemäß der vorbeschriebene Eichvorgang wiederholt werden, auch wenn die Teilscheibe 3 nicht aus ihrer Momentanposition heraus bewegt werden kann, weil beispielsweise gerade ein Werkzeug im Eingriff ist, wenn die Störung auftritt.

Wie oben beschrieben, wird bei Koinzidenz der Markierung 15 mit dem Abtastfeld 16 der Zähler gestartet, die Inkremente, die von der Inkrementalteilung 6 über den Abtastfeldern 10 zurückgelegt werden, werden gezählt, bis bei Koinzidenz der Markierung 17 mit der nächsten, auf den

Zählerstartvorgang folgenden Referenzmarke $R_k$ der Zähler wieder gestoppt wird, wobei gleichzeitig die Markierung 18 die Codemarke $C_k$ abtastet und dieser absolute Positionswert der Referenzmarke $R_k$ in der Auswerteeinrichtung dem gezählten Meßwert überlagert wird.

Damit liegt wieder der absolute Positionswert fest, der die momentane Lage des Teilungsnullpunktes der Teilscheibe 3 zum Gehäuse 1 darstellt.

Bei der Beschreibung des Eichvorganges wurde angenommen, daß die Welle 2 mit der Teilscheibe 3 stillsteht. Dies ist aber nicht Bedingung. Vorausgesetzt werden muß allerdings, daß der Trägerkörper 5 bei der Eichung schneller dreht, als die Teilscheibe 3. Die Bezugswertübernahme erfolgt in dem Augenblick, in dem die Markierung 17 die Referenzmarke Ri überfährt.

Besonders vorteilhaft ist es, wenn die Markierungen 15, 16, 17 und die Referenzmarken Ro...Rn aus einer Folge von unregelmäßig verteilten Markierungsstrichen zusammengesetzt sind, so daß die zusammengefaßten Markierungsstriche jeweils eine Markierung bilden.

## Patentansprüche

1. Inkrementale Längen - oder Winkelmeßeinrichtung mit einer ersten Maßverkörperung, die Markierungen in Form einer Inkrementalteilung und wenigstens einer zum Teilungsnullpunkt absolut festliegenden Referenzmarke aufweist, einem weiteren Trägerkörper mit abtastbaren Markierungen, einer Abtasteinrichtung mit einer Abtastplatte, die Abtastfelder zum Abtasten von Markierungen trägt und einer Auswerteeinrichtung nach Art eines Zählers, dadurch gekennzeichnet, daß der weitere Trägerkörper (5) sowohl zur ersten Maßverkörperung (3) als auch zur Abtasteinrichtung (7) relativ beweglich ist und Markierungen (15, 17) zum Zählerstart, Zählerstopp, sowie eine Inkremental-Teilung (6) und ein Codemarken-Abtastfeld (18) aufweist, und daß aufgrund der Relativbeweglichkeit diese Markierungen (6, 15, 17, 18) des weiteren Trägerkörpers (5) mit den Markierungen (Ro...Rn, Co...Cn) der Maßverkörperung (3) und/oder den Abtastfeldern (10, 16) der Abtasteinrichtung (7) nacheinander in Koinzidenz bringbar sind, und daß bei jeweiliger Koinzidenz der verschiedenen Markierungen und Abtastfelder elektrische Steuersignale erzeugt werden, die Steuervorgänge wie Zählerstart, Inkrementalzählung und Zählerstopp in der Auswerteeinrichtung auslösen.

2. Inkrementale Längen - oder Winkelmeßeinrichtung nach Anspruch 1, dadurch gekennzeichnet, daß die erste Maßverkörperung eine Teilscheibe (3) ist, und daß der weitere Trägerkörper (5) konzentrisch zur Teilscheibe (3) rotiert.

3. Inkrementale Winkelmeßeinrichtung nach den Ansprüchen 1 und 2, dadurch gekennzeichnet, daß die Teilscheibe (3) außer der Inkrementalteilung (4) eine konzentrisch angeordnete Spur mit $2^n$ Referenzmarken (Ro...Rn) sowie eine weitere konzentrisch angeordnete Spur mit $2^n$, den Referenzmarken (Ro...Rn) zugeordneten Codemarken (Co...Cn) aufweist, wobei die Codemarken (Co...Cn) die absoluten Lagewerte der zugehörigen Referenzmarken (Ro...Rn) in verschlüsselter Form enthalten.

4. Inkrementale Winkelmeßeinrichtung nach Anspruch 1, dadurch gekennzeichnet, daß die Markierungen (15, 16, 17, (Ro...Rn)) aus einer Folge von unregelmäßig verteilten Markierungen zusammengesetzt sind.

## Revendications

1. Dispositif incrémental de mesure de longeurs ou d'angles comprenant une première règle de mesure qui présente des marques sous forme de graduation incrémentale et au moins une marque de référence qui est fixe de manière absolue par rapport au point zéro de la graduation, un autre corps-support muni de marques pouvant être explorées, un dispositif d'exploration comportant une plaque d'exploration qui porte des champs d'exploration pour explorer des marques et un dispositif d'interprétation se présentant sous la forme d'un compteur, caractérisé en ce que l'autre corps-support (5) est mobile aussi bien par rapport à la première règle de mesure (3) que par rapport au dispositif d'exploration (7) et présente des marques (15, 17) pour le démarrage et l'arrêt du compteur ainsi qu'une graduation incrementale (6) et un champ d'exploration de marques codées (18) et en ce que du fait de la mobilité relative, ces marques (6, 15, 17, 18) de l'autre corps-support (5) peuvent être amenées successivement en coïncidence avec les marques (Ro...Rn, Co...Cn) de la règle de mesure (3) et/ou avec les champs d'exploration (10, 16) du dispositif d'exploration (7) et en ce que en cas de coïncidence des différentes marques et champs d'exploration, des signaux électriques de commande sont produits qui déclenchent des opérations de commande telles que le démarrage du compteur, le comptage incrémental et l'arrêt du compteur dans le dispositif d'interprétation.

2. Dispositif incrémental de mesure de longueurs ou d'angles selon la revendication 1, caractérisé en ce que la première règle de mesure est un disque partiel (3) et en ce que l'autre corps-support (5) tourne concentriquement par rapport au disque partiel (3).

3. Dispositif incrémental de mesure de longueurs ou d'angles selon les revendications 1 et 2, caractérisé en ce que le disque partiel (3) présente, outre la graduation incrémentale (4), une piste disposée concentriquement et munie de $2^n$ marques de référence (Ro...Rn) ainsi qu'une autre piste disposée concentriquement et munie de $2^n$ marques codées (Co...Cn) associées aux marques de référence (Ro...Rn), les marques codées (Co...Cn) contenant sous forme codée les valeurs de position absolues des marques de référence (Ro...Rn) correspondantes.

4. Dispositif incrémental de mesure de longueurs ou d'angles selon la revendication 1, caractérisé en ce que les marques (15, 16, 17, (Ro...Rn)) sont composées d'une succession de marques réparties irrégulièrement.

## Claims

1. Incremental length or angle measuring device with a first measuring unit, which comprises markings in the form of an incremental graduation and at least one reference mark in an absolute fixed position relative to the graduation zero point, a further support body with markings which can be sensed, a sensing device with a sensing plate, which carries sensing fields for sensing markings and a processing device in the form of a counter, characterized in that the further support body (5) is movable relative to both the first measuring unit (3) and the sensing device (7) and has markings (15, 17) for starting the counter, stopping the counter, also an incremental graduation (6) and a code mark sensing field (18), and in that, in accordance with the movement, these markings (6, 16, 17, 18) of the further support body (5) can be brought sequentially into coincidence with the markings (Ro...Rn, Co...Cn) of the measuring unit (3) and/or the sensing fields (10, 16) of the sensing device (7), and in that with each coincidence of the various markings and sensing fields, electrical control signals are generated, which activate control operations such as starting the counter, incremental counting and stopping the counter in the processing device.

2. Incremental length or angle measuring device according to claim 1, characterized in that the first measuring unit is a graduated disc (3), and in that the second support body (5) rotates concentric with the graduated disc.

3. Incremental angle measuring device according to claims 1 and 2, characterized in that the graduated disc (3) has, as well as the incremental graduation (4) a concentrically arranged track with $2^n$ reference marks (Ro...Rn), as well as a further concentrically arranged track with $2^n$ code marks (Co...Cn) associated with the reference marks (Ro...Rn), wherein the code marks (Co...Cn) contain the absolute position values of the associated reference marks (Ro...Rn) in coded form.

4. Incremental angle measuring device according to claim 1, characterized in that the markings (15, 16, 17, (Ro...Rn)) are assembled from a series of irregularly distributed markings.

*FIG.1*

FIG.2

FIG.3

FIG.4